# EUROPÄISCHE PATENTSCHRIFT

(11) **EP 2 607 764 B1**
(45) Veröffentlichungstag und Bekanntmachung des Hinweises auf die Patenterteilung: **28.01.2015**
(21) Anmeldenummer: 11195572.0
(22) Anmeldetag: 23.12.2011
(51) Int. Cl.: F16L 13/14, F16L 33/025, F16L 33/207

(54) **Rohrklemme mit Anschlussstück**
Pipe clamp with connector piece
Collier de serrage de tuyau doté d'une pièce de raccordement

(43) Veröffentlichungstag der Anmeldung: 26.06.2013
(73) Patentinhaber: Geberit International AG, 8645 Jona (CH)
(72) Erfinder: Huber, René, 8645 Jona (CH); Baggenstos, Roger, 8645 Jona (CH); Stoll, Rémy, 8708 Männedorf (CH); Schneider, Thomas, 8630 Rüti (CH)
(74) Vertreter: Frischknecht, Harry Ralph

(56) Entgegenhaltungen:
- EP-A1- 1 096 194
- EP-A1- 2 341 273
- EP-A2- 0 405 245
- WO-A2-2009/129928
- DE-A1- 19 635 053
- DE-U1-202005 012 526
- US-A- 5 096 231
- US-A- 5 228 721
- US-A- 5 255 944
- US-A1- 2006 082 156

## Beschreibung

### TECHNISCHES GEBIET

Die vorliegende Erfindung betrifft eine Rohrklemme mit einem Anschlussstück nach dem Oberbegriff von Anspruch 1.

### STAND DER TECHNIK

Aus der EP 1 096 194 ist ein dichtringfreier Pressfitting für Kunststoff- oder Kunststoff/Metall-Verbundrohre bekannt. Die Stützhülse weist eine Vielzahl von Rillen und Erhebungen mit unterschiedlichen Durchmessern auf. Es hat sich aber in der Praxis gezeigt, dass die Verpressung und Dichtung nicht immer optimal sind.

Insbesondere bei Drehmomenten, welche auf das Rohr wirken, kann dies bei den genannten Pressfittings ohne separaten Dichtring zu Dichtungsproblemen zwischen dem Rohr und der Stützhülse führen. Gleiches kann bezüglich einer Krafteinwirkung auf das Rohr in Längsrichtung gesagt werden.

Weiter ist die Stützhülse nach der EP 1 096 194 aufgrund der vielen Vorsprünge nicht einfach in der Herstellung.

Aus der EP 0 405 245 ist eine Schlauchanschlussarmatur bekannt geworden. Die Schlauchanschlussarmatur umfasst einen in ein Schlauchende einsetzbaren Nippel und eine auf das Schlauchende und den Nippel wirkende Klemme.

Die US5,096,231, die US 5,228,721, die US 5,255,944, die DE 196 35 053 und die WO 2009/129928 zeigen weitere Ausführungen von Anschlussarmaturen, wobei die genannte US 5,255,944 die Merkmale gemäß Oberbegriff von Anspruch 1 offenbart.

### DARSTELLUNG DER ERFINDUNG

Ausgehend von diesem Stand der Technik liegt der Erfindung eine Aufgabe zugrunde, ein Anschlussstück für eine Rohrklemme ohne Dichtungsring, also für eine dichtringfreie Rohrklemme, anzugeben, welche die Nachteile des Standes der Technik überwindet. Insbesondere soll das Anschlussstück eine dauerhafte bezüglich Fluiden dichte Verbindung gewährleisten. Eine weitere Aufgabe der Erfindung ist es, eine einfach herzustellende Rohrklemme anzugeben.

Eine solche Aufgabe löst eine Rohrklemme nach Anspruch 1. Demgemäss umfasst eine Rohrklemme zum Verbinden eines Rohres ein in das Rohr einsteckbares Anschlussstück mit einem vorderen Ende, das in das Rohr einragt, und einen das Anschlussstück und das Rohr über einen Wirkbereich umgebenden Klemmring, der von einem Werkzeug zusammenpressbar ist. Das Anschlussstück umfasst eine im Wesentlichen zylindrisch um eine Mittelachse verlaufende Seitenwand mit einer gegen die Rohrinnenwand gerichteten Kontaktfläche. Durch den Vorgang der Verpressung des Klemmenrings wird das Rohr gegen das Anschlussstück gepresst, so dass die Kontaktfläche des Anschlussstückes mit der besagten Rohrinnenwand in Kontakt kommt bzw. gegen die Rohrinnenwand gegen die Kontaktfläche gepresst wird. Das Anschlussstück umfasst im Wirkbereich des Klemmrings einen Dichtbereich zur Herstellung einer Dichtung zwischen Anschlussstück und Rohr, sowie einen vom Dichtbereich getrennt ausgebildeten Haltebereich zur Aufnahme von zwischen dem Anschlussstück und den Rohr auftretenden Kräften. Die Dichtung zwischen Anschlussstück und Rohr wird über die besagte Verpressung und der damit verbundene Kontakt zwischen der Rohrinnenwand und dem Dichtbereich bereitgestellt. Es handelt sich also um eine Dichtung ohne separates Dichtelement. Der Haltebereich ist ausschliesslich für die Aufnahme von mechanischen Belastungen zwischen Rohrklemme und Stützhülse vorgesehen.

Eine derartige Rohrklemme hat den Vorteil, dass aufgrund der Trennung von Dichtbereich und Haltebereich, jeder der beiden Bereiche für seine Funktion optimal ausgebildet werden kann.

Der Dichtbereich umfasst mindestens einen sich radial von der Kontaktfläche erstreckenden und um die Mittelachse vollständig umlaufenden Vorsprung und eine sich dem Vorsprung direkt und unmittelbar anschließende Dichtfläche, welche einen grösseren Durchmesser als die Kontaktfläche und einen kleineren Durchmesser als der Vorsprung aufweist. Hierdurch kann eine besonders einfache Struktur geschaffen werden, was die Herstellung vereinfacht.

In Richtung der Mittelachse gesehen ist vor und nach der Dichtfläche je ein umlaufender Vorsprung angeordnet, so dass die Dichtfläche in Richtung der Mittelachse durch diese zwei Vorsprünge begrenzt ist. Hierbei können die beiden Vorsprünge als Begrenzungsmittel gegen ein Fliessen des Rohrmaterials dienen.

Der Vorsprung ist durch zwei im Querschnitt senkrecht zur Mittelachse gesehen geneigt zur Mittelachse verlaufende Seitenflanken begrenzt. Die Seitenflanken bilden im Querschnitt gesehen insbesondere die Seiten eines Dreiecks. Die Dichtfläche ist durch eine zylindrische sich vollständig um die Mittelachse erstreckende Oberfläche bereitgestellt.

Vorzugsweise ist der Dichtbereich bezüglich des vorderen Endes in Richtung der Mittelachse gesehen hinter dem Haltebereich angeordnet. Folglich schliesst sich dem vorderen Ende zuerst der Haltebereich und dann der Dichtbereich an. Dies hat den Vorteil, dass die Krafteinwirkung auf den Dichtbereich minimiert werden kann.

Bevorzugterweise weist der Haltebereich mindestens einen sich radial von der Kontaktfläche erstreckenden und um die Mittelachse vollständig umlaufender Haltevorsprung auf. Besonders bevorzugt sind mehrere Haltebereiche bezüglich der Mittelachse gesehen hintereinander angeordnet.

Vorzugsweise weist der mindestens eine Haltevorsprung im Querschnitt senkrecht zur Mittelachse gesehen die Form eines Dreiecks mit zwei Seitenschenkeln auf. Besonders bevorzugt ist dabei die Gestalt eines gleichschenkligen Dreiecks, wobei bevorzugt die beiden Seitenschenkel, welche die Begrenzung über der Kontaktfläche definieren, die gleichen Schenkel des gleichschenkligen Dreiecks darstellen.

Wenn mehrere Haltevorsprünge angeordnet sind, sind diese vorzugsweise bezüglich Form und Dimension gleich oder im Wesentlichen gleich ausgebildet. Alternativ können sich die Haltevorsprünge im Fall von mehreren Haltevorsprüngen sich bis hin zu einem maximalen Durchmesser erstrecken, wobei der Durchmesser derjenigen Haltvorsprünge, welche näher beim vorderen Ende des Anschlussstückes liegen, im Durchmesser kleiner oder grösser werden, als diejenigen Haltevorsprünge, welche weiter vom vorderen Ende entfernt sind.

Vorzugweise weist das Anschlussstück zwischen dem Haltebereich bzw. dem Dichtbereich und dem vorderen Ende ein Führungsbereich mit einer Führungsfläche auf. Die Führungsfläche weist dabei bevorzugt einen grösseren Durchmesser als die Kontaktfläche zwischen Dichtbereich bzw. Haltebereich.

Vorzugsweise ist der Führungsbereich ausserhalb des Wirkbereichs der Rohrklemme angeordnet.

Vorzugsweise ist der Übergang von der Kontaktfläche auf die Führungsfläche mit einem im Querschnitt senkrecht zur Mittelachse gesehen konkaven Radius und mit einer sich daran anschliessenden und sich im Querschnitt gesehen geneigt zur Mittelachse erstreckenden Abschnitt ausgebildet.

Vorzugsweise umfasst die Rohrklemme weiter einen Spannring, welcher mit einem Spannabschnitt in den Wirkbereich einragt. Der Spannring hat vorzugsweise die Gestalt einer Spannzange.

Vorzugsweise weist der Spannabschnitt des Spannrings einen Haltebereich auf, welcher mindestens teilweise in das Rohr eindringt.

Das zu klemmende Rohr einer Rohrklemmenanordnung mit einer oben beschriebenen Rohrklemme ist vorzugsweise ein Verbundrohr mit einer Innenschicht, einer Mittelschicht und einer Aussenschicht ist, wobei die Mittelschicht aus einem metallischen Werkstoff und die Innenschicht und die Aussenschicht aus Kunststoff sind.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Schnittansicht einer Rohrklemme nach einer Ausführungsform der vorliegenden Erfindung;
- Fig. 2: eine perspektivische Ansicht einer Rohrklemmanordnung;
- Fig. 3: eine perspektivische Ansicht eines Anschlussstückes für eine Rohrklemme nach der Ausführungsform der Figur 1;
- Fig. 4: eine Schnittansicht des Anschlussstückes nach Figur 3; und
- Fig. 5a-d: Detailansichten von den Details A bis D nach der Figur 4.

### BESCHREIBUNG BEVORZUGTER AUSFÜHRUNGSFORMEN

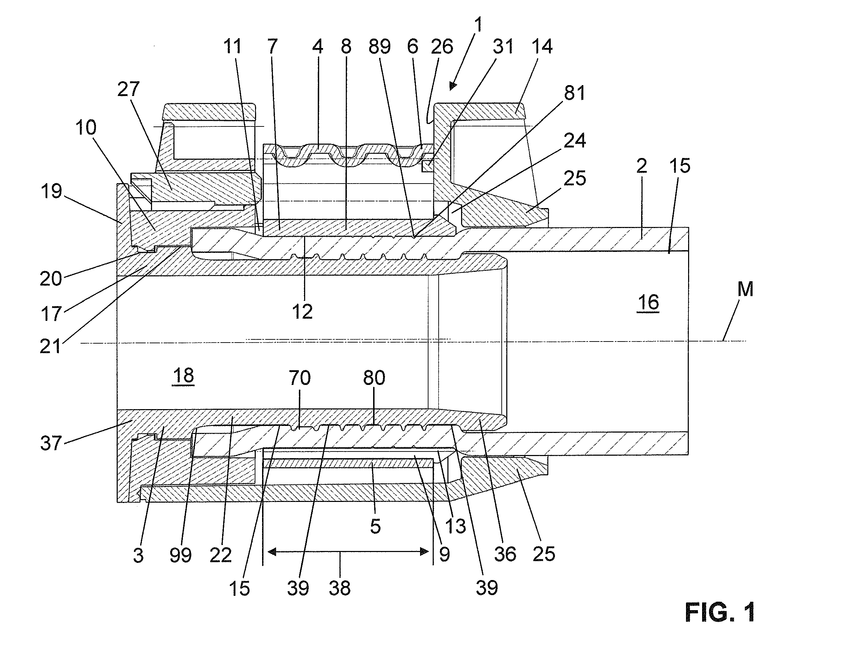

In der Figur 1 wird eine Schnittdarstellung einer Rohrklemmanordnung mit einer erfindungsgemässen Rohrklemme 1 nach einer Ausführungsform im verpressten Zustand gezeigt. Die Rohrklemme 1 dient zum Verbinden eines Rohres 2 mit einem in ein Ende des Rohres 2 einsteckbaren Anschlussstück 3. Die Rohrklemme 1 umfasst im Wesentlichen ein in das Rohr 2 einsteckbares Anschlussstück 3 mit einem vorderen Ende 36, das in das Rohr 2 einragt, und einen das Anschlussstück 3 und das Rohr 2 über einen Wirkbereich 38 umgebenden Klemmring 4, der von einem Werkzeug zusammenpressbar ist.

Das Anschlussstück 3 umfasst im Wesentlichen eine zylindrisch um eine Mittelachse M verlaufende Seitenwand 17 mit einer gegen die Rohrinnenwand 15 gerichteten Kontaktfläche 39. Durch den Vorgang der Verpressung des Klemmenrings 4 wird das Rohr 2 gegen das Anschlussstück 3 gepresst, so dass die Kontaktfläche 39 des Anschlussstückes 3 mit der Rohrinnenwand 15 des Rohrs 2 in flächigen Kontakt kommt. Das Anschlussstück 3 ist im Wesentlichen einstückig ausgebildet.

Weiter umfasst das Anschlussstück 3 im Wirkbereich 38 des Klemmring 4 einen Dichtbereich 70 zur Herstellung einer Dichtung zwischen Anschlussstück 3 und Rohr 2, sowie einen vom Dichtbereich 70 getrennt ausgebildeten Haltebereich 80 zur Aufnahme von zwischen dem Anschlussstück 3 und den Rohr 2 auftretenden Kräften. Die Trennung von Dichtbereich 70 und Haltebereich 80 hat den Vorteil, dass jeder Bereich optimal auf die entsprechende Funktion, also auf die Funktion des Dichtens beim Dichtbereich und auf die Funktion des Haltens beim Haltebereich 80, ausgebildet werden kann. Zudem erhöht die Trennung dieser Bereiche die Funktionssicherheit der Verbindung zwischen Anschlussstück 3 und Rohr 2 massiv.

In der Abbildung nach Figuren 1, 3 und 4 wird hier nur ein Teil des Anschlussstückes 3 gezeigt. Am hinteren Ende 37 gegenüber dem Rohr 2 bzw. dem vorderen Ende 36 entlang der Mittelachse M gesehen, kann sich das Anschlussstück 2 beliebig fortsetzen, beispielsweise mit einem Abschnitt, welcher identisch zum gezeigten Anschlussstück 2 ausgebildet ist.

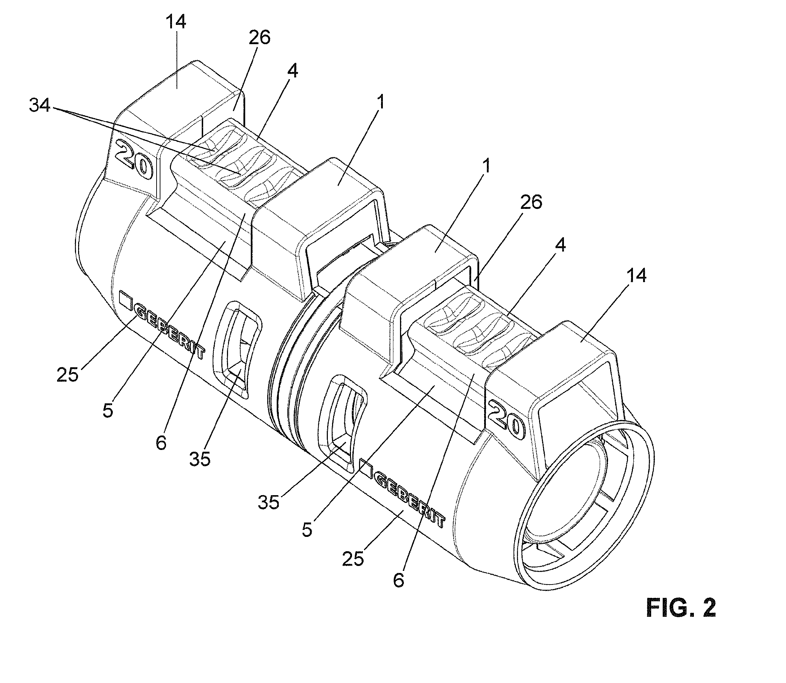

In der Figur 2 kann eine solche Fortbildung des Anschlussstückes 2 teilweise erkannt werden. Hier umfasst die Rohrklemmanordnung zwei Rohrklemmen 1, welche über ein Anschlussstück 3 miteinander in Verbindung stehen.

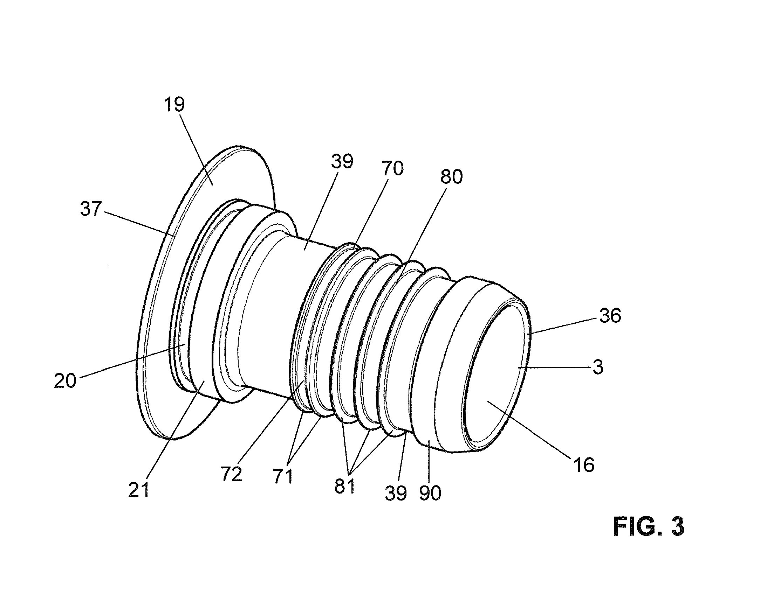

Die Rohrklemme 1 als solche wird untenstehend noch im Detail erläutert. In der Folge wird nun die Struktur des Anschlussstückes 3 anhand der Figuren 3 bis 5 entsprechend erläutert.

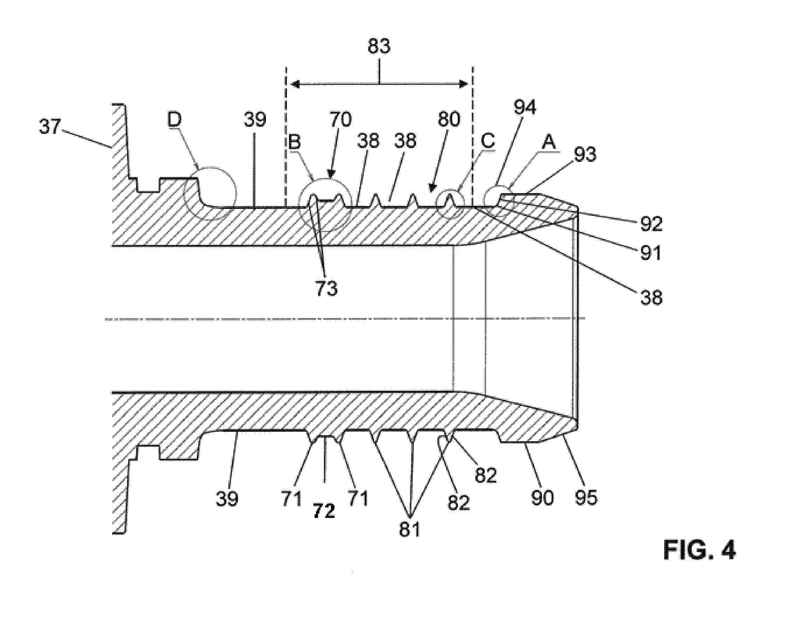

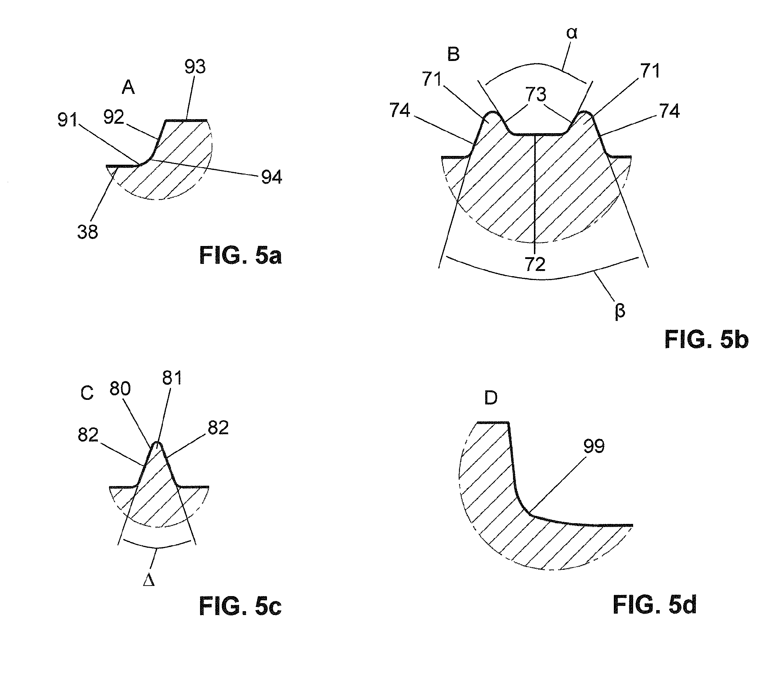

Der Dichtbereich 70, welche in der Folge anhand der Figuren 4 und 5b erläutert wird, ist in Richtung der Mittelachse M vom vorderen Ende 36 gesehen vorzugsweise hinter dem Haltebereich 80 angeordnet. Hierdurch werden mögliche Kräfte zwischen Rohr 2 und Rohrklemme 1 vorab über den Haltebereich 80 auf das Anschlussstück 3 übertragen, bevor die Kräfte auf den Dichtbereich 70 wirken. Dies erhöht die Funktionssicherheit beim Dichtbereich weiter.

Der Dichtbereich 70 umfasst vorzugsweise mindestens einen sich radial von der Kontaktfläche 39 erstreckender Vorsprung 71 und eine sich dem Vorsprung 71 direkt und unmittelbar anschliessende Dichtfläche 72. Die Dichtfläche 72 weist, wie in den Figuren gezeigt, bevorzugt einen grösseren Durchmesser auf als die Kontaktfläche 39. Weiter weist die Dichtfläche 72 bevorzugt einen kleineren Durchmesser auf als der Vorsprung 71.

Vorzugsweise wird die Dichtfläche 72 in Richtung der Mittelachse M gesehen auf beiden Seiten durch je einen Vorsprung 71 begrenzt. Es ist also in Richtung der Mittelachse M gesehen vor und nach der Dichtfläche 72 je ein umlaufender Vorsprung 71 angeordnet. Die Vorsprünge 71 schliessen sich dabei der Dichtfläche 72 direkt und unmittelbar an, so dass keine Lücke zwischen Vorsprung 71 und Dichtfläche 72 vorhanden ist. Die Dichtfläche 72 kommt dabei im verpressten Zustand in vollständigen und flächigen Kontakt mit dem Rohr 2. Es kann auch gesagt werden, dass sich das Rohr über den Dichtbereich 70 entsprechend anschmiegt.

Der Vorsprung 71, welcher auch als umlaufender Kamm oder umlaufender Steg bezeichnet werden kann, umgibt die Kontaktfläche 39 im Wesentlichen vollständig. Das heisst, dass sich der Vorsprung 71 vollständig um die zylindrische Kontaktfläche 39 erstreckt. Zudem erstreckt sich der Vorsprung 71 von der Dichtfläche radial nach aussen und sorgt daher für eine Durchmessererhöhung. Der Vorsprung 71 wird jeweils durch zwei Seitenflanken 73, 74 begrenzt. Im Querschnitt in einer Richtung senkrecht zur Mittelachse M gesehen verlaufen die Seitenflanken 73, 74 geneigt oder winklig zur Mittelachse M. Die Seitenflanken 73 bilden also im Wesentlichen die Seiten eines Dreiecks. Die Seitenflanken 73, welche zur Dichtfläche 72 gerichtet sind, können auch als innere Seitenflanken 73 bezeichnet werden. Diese Seitenflanken 73 schliessen zueinander einen Winkel α ein. Vorzugsweise ist der Winkel a im Bereich von 50° bis 70°, insbesondere von 60°. Die Seitenflanken 74, welche zur Kontaktfläche 39 hin gerichtet sind, und daher auch als äussere Seitenflanken 73 bezeichnet werden können, schliessen einen Winkel β zueinander ein. Der Winkel β liegt vorzugsweise zwischen 30° und 50°, insbesondere bei 40°.

Die Seitenflanken 73, welche zur Dichtfläche 72 gerichtet sind, verlaufen vorzugsweise in einem flacheren Winkel zur Mittelachse M, als die Seitenflanken 74, welche zur Kontaktfläche 39 gerichtet sind. Hierbei handelt es sich um eine Optimierung bezüglich des Fliessverhaltens des Rohrmaterials, welches in den Bereich zwischen den beiden Vorsprüngen 71 bis auf die Dichtfläche 72 eindringt.

Die Dichtfläche 72 erstreckt sich im Wesentlichen zylindrisch entlang der Mittelachse M. Folglich weist die Dichtfläche 72 eine im Wesentlichen zylindrisch ausgebildete und vollständig um die Mittelachse M verlaufende Oberfläche auf. Die Länge der Dichtfläche 72 in Richtung der Mittelachse M gesehen ist vorzugweise grösser als die Dicke des Vorsprungs 71 von der inneren Seitenflanke 73 zur äusseren Seitenflanke 74 auf der Höhe bzw. dem Durchmesser der Dichtfläche 72 gesehen. Der Durchmesser der Dichtfläche 72 ist dabei grösser als der Durchmesser der Kontaktfläche 39, insbesondere von dem Bereich der Kontaktfläche 39, welche sich direkt und unmittelbar an den mindestens einen Vorsprung 71 anschliesst. Der Durchmesser der Dichtfläche 72 ist aber kleiner als der Durchmesser des mindestens einen Vorsprungs 71.

Das Rohr 2 schmiegt sich, wie es in der Figur 1 gezeigt wird, dem Dichtbereich 70 an. Das heisst, dass das Rohr 2 im Wesentlichen über die gesamte Oberfläche des Dichtbereichs 70 mit demselben in Kontakt steht. Der Dichtbereich 70 mit dem mindestens einen Vorsprung 71 hat den Vorteil, dass aufgrund der Durchmessererhöhung der Dichtfläche 72 und des Vorsprungs 71 gegenüber der Kontaktfläche 39 eine Zone mit erhöhter Kompression auf das Rohr 2 geschaffen werden kann. Durch die definierten Winkel kann die Kompression weiter verbessert werden. Die erhöhte Kompression hat die Wirkung, dass die Spannung im Rohr lokal erhöht wird und diese somit über einen sehr langen Zeitraum gehalten werden kann, was der Dichtwirkung äusserst zuträglich ist. Unter einem langen Zeitraum werden hierin Jahre oder gar Jahrzehnte verstanden.

Weiter verhindern die beiden sich direkt an die Dichtfläche 72 anschliessende Vorsprünge 71, ein Abfliessen von Rohrmaterial, insbesondere von Kunststoff bei Metallverbundrohren, entlang der Mittelachse M. Die Vorsprünge 71 bilden somit eine Art Anschlag für das Rohrmaterial, was für die Dichtwirkung und die Langlebigkeit der Dichtverbindung äusserst vorteilhaft ist.

Auch stellen die Vorsprünge 71 und die Dichtfläche 72 eine gewisse Elastizität bereit, welche den Ausgleich von masslichen oder geometrischen Veränderungen aufgrund von Temperaturschwankungen ausgleicht.

Der Haltebereich 80, welcher anhand der Figuren 4 und 5c erläutert wird, umfasst mindestens einen sich radial von der Kontaktfläche 39 erstreckenden und um die Mittelachse M vollständig umlaufenden Haltevorsprung 81. Der Haltevorsprung steht dabei beabstandet zum Dichtbereich 70 bzw. zum Vorsprung 71 und zur Dichtfläche 72.

Im vorliegenden Ausführungsbeispiel erstrecken sich drei beabstandet zueinander angeordnete Haltevorsprünge 81. Zwischen den Haltevorsprüngen 81 erstreckt sich dabei die Kontaktfläche 39, wobei die Kontaktfläche 39 bevorzugt einen konstanten Durchmesser aufweist. In anderen Ausführungsformen ist es aber auch möglich, mehr oder weniger als drei Haltevorsprünge 81 anzuordnen.

Vorzugsweise weist der Haltevorsprung 81 im Querschnitt senkrecht zur Mittelachse M gesehen die Form eines Dreiecks mit zwei Seitenschenkel 82 auf. Besonders bevorzugt handelt es sich beim Dreieck um ein gleichschenkliges Dreieck, wobei die beiden sich von der Kontaktfläche 39 erstreckenden Seitenschenkel 82 die gleichen Schenkel des gleichschenkligen Dreiecks darstellen. Die beiden Seitenschenkel 82 eines Haltevorsprungs 81 verlaufen somit mit einem gleichen Winkel zur Mittelachse M.

Die Seitenschenkel 82 schliessen einen Winkel Δ ein, welcher im Bereich von 30° bis 50° liegt, insbesondere bei 40° liegt.

Vorzugsweise sind mehrere Haltevorsprünge 81 angeordnet. Zwischen den Haltevorsprüngen 81 erstreckt sich dann immer einen Abschnitt der Kontaktfläche 39. Folglich sind die Haltevorsprünge 81 beabstandet zueinander angeordnet.

Diese mehreren Haltevorsprünge 81 können dabei bezüglich Form und Dimension im Wesentlichen gleich zueinander ausgebildet sind. Alternativ können die Haltevorsprünge 81 auch verschieden zueinander ausgebildet sein. Insbesondere ist es vorteilhaft, wenn der Durchmesser der Haltevorsprünge, welche näher beim vorderen Ende 36 angeordnet sind, kleiner gewählt wird als der Durchmesser derjenigen Haltevorsprünge, welche vom vorderen Ende 36 weiter entfernt angeordnet sind.

Durch die Anordnung des Haltebereichs 80 nach der oben beschriebenen Ausbildung kann eine optimierte Haltezone geschaffen werden. Hierdurch kann die Verbindung weiter optimiert werden.

Von den Figuren 1, 4 und 5a kann weiter erkannt werden, dass das Anschlussstück 3 einen optionalen Führungsbereich 90 umfasst. Der Führungsbereich 90 ist dabei zwischen dem vorderen Ende 36 und dem Haltebereich 80 bzw. dem Dichtbereich 70 angeordnet. Der Führungsbereich 90 dient im Wesentlichen der mechanischen Abstützung des Rohrs 2 nach der Verpressung und der Führung des Rohrs 2 während der Herstellung der Rohrverbindung.

Der Führungsbereich 90 weist dabei einen grösseren Durchmesser auf als die Kontaktfläche 39 zwischen dem Dichtbereich 70 bzw. dem Haltebereich 80 und dem Führungsbereich 90. Der Führungsbereich 90 umfasst dabei eine Führungsfläche 93, welche im Wesentlichen zylindrisch ausgebildet ist und sich vollständig um die Mittelachse M herum erstreckt. Aufgrund der unterschiedlichen Durchmesser bzw. der Durchmesserveränderung von der Kontaktfläche 39 zur Führungsfläche 93 gibt es zwischen Kontaktfläche 39 und Führungsfläche 93 einen Übergang 94.

Der Übergang 94 wird in der Figur 5a im Detail gezeigt. Der Übergang 94 umfasst einen konkaven Radius 91, welcher sich der Kontaktfläche 39 anschliesst, und einen sich im Querschnitt senkrecht zur Mittelachse M gesehen geneigt erstreckenden Abschnitt 92. Der Abschnitt 92 schliesst sich dem Radius an und geht dann auf die Führungsfläche 93 über. Bezüglich des Abschnittes 92 kann auch gesagt werden, dass dieser die Gestalt eines Konus aufweist.

Von der Figur 1 kann gut erkannt werden, dass der Führungsbereich 90 ausserhalb des Wirkbereichs 38 der Rohrklemme 4 angeordnet ist. Somit wirken auf den Führungsbereich 90 keine Klemmkräfte. Vorzugsweise erstreckt sich der Wirkbereich bis kurz vor oder an den Übergang zwischen Kontaktfläche 39 und Radius 91. Das hat weiterhin den Vorteil, dass das Rohr 2 nach dem Verpressen im Bereich des Übergangs 94 leicht verformt wird, was eine zusätzliche Sicherheit gegen Längskräfte bietet.

Gegen das vordere Ende hin kann die Führungsfläche 93 optional einen konischen Abschnitt 95 aufweisen, welcher das Einschieben des Anschlussstückes 3 in das Rohr 2 vereinfacht.

Von der Figur 1 kann gut erkannt werden, dass die Rohrklemme 1 vorteilhafterweise einen optionalen Spannring 7 umfasst, welcher mit einem Spannabschnitt 8 in den Wirkbereich 39 des Klemmrings 4 zwischen Klemmring 4 und Rohr 2 einragt. Der Spannabschnitt 8 des Spannrings 7 weist weiterhin einen optionalen Haltebereich 89 auf, welcher im Wesentlichen analog zum Haltebereich 80 am Anschlussstück 3 ausgebildet ist und ebenfalls mindestens ein Haltervorsprung 81 aufweist. Die Haltevorsprünge 81 des Haltebereichs 89 am Spannring 7 weisen im Wesentlichen die gleichen Eigenschaften auf, wie die Haltebereiche 80 am Anschlussstück 3 auf, wobei auf die obige Beschreibung verwiesen wird. Die Haltevorsprünge 81 des Spannabschnitts 7 sind dabei vorzugsweise mittig zu den Haltevorsprüngen 81 des Haltebereichs 80 angeordnet.

Weiter kann in den Figuren 1, 4 und 5d noch erkannt werden, dass der Übergang 99 von der Kontaktfläche 39 gegenüberliegend des Führungsbereichs 90 ebenfalls gerundet ausgebildet ist. Diese Rundung hat den Vorteil, dass die Kerbwirkung verkleinert werden kann, was einem Bruch des Anschlussstückes 3 in diesem Bereich vorbeugt.

Beim Rohr 2 handelt es sich vorzugsweise um ein Verbundrohr mit einer Innenschicht, einer Mittelschicht und einer Aussenschicht ist, wobei die Mittelschicht aus einem metallischen Werkstoff und die Innenschicht und die Aussenschicht aus Kunststoff sind. Hierdurch kann eine besonders gute Wirkung mit dem oben beschriebenen Anschlussstück 3 erzielt werden.

Mit Bezug zu den Figuren 1, 2 und 3 wird die bevorzugte Rohrklemme 1 zum Verbinden eines Rohres 2 mit einem in ein Ende des Rohres 2 einsteckbaren Anschlussstück 3 weiter erläutert.

Das Rohr 2 ist im Wesentlichen zylindrisch ausgebildet und erstreckt sich entlang einer Mittelachse M und kann beispielsweise als Wasserleitung dienen. Das Rohr 2 begrenzt mit einer umlaufenden Seitenwand 15 einen Rohrinnenraum 16.

Das Anschlussstück 3, welches mit dem Rohr 2 verbunden werden soll, ist im Wesentlichen zylindrisch ausgebildet und erstreckt sich entlang einer Mittelachse M. Das Anschlussstück 3 begrenzt mit einer umlaufenden Seitenwand 17 einen Hohlraum 18. Das Anschlussstück 3 weist weiterhin einen Flansch 19 auf, welcher sich von der Seitenwand 17 bezüglich des Hohlraums 18 nach aussen erstreckt. Im Bereich des Flansches 19 ist zudem eine umlaufende Rille 20 und eine umlaufende Erhebung 21, welche dann von einem Lagerungsabschnitt 22 gefolgt wird, angeordnet. Der Lagerungsabschnitt 22 wird in der vorliegenden Ausführungsform durch die Kontaktfläche 39, den Dichtbereich 70, den Haltebereich 80 und ggf. dem Führungsbereich 90 bereitgestellt. Mit dem Lagerungsabschnitt 22 ragt das Anschlussstück 3 in den Rohrinnenraum 16 ein. In diesem Bereich wird durch die Rohrklemme 1 auch eine entsprechende Kraft auf das Anschlussstück 3 übertragen.

Das Rohr 2 und das Anschlussstück 3 werden mit einer Rohrklemme 1 miteinander verbunden. Dabei ragt das Anschlussstück 3 mit dem Lagerungsabschnitt 22 in den Rohrinnenraum 16 ein und erstreckt sich soweit in den Rohrinnenraum 16, dass der Lagerungsabschnitt 22 in den Wirkungsbereich der Rohrklemme 1 zu liegen kommt. Hier kommen insbesondere der Dichtbereich 70 und der Haltebereich 80 in den Wirkbereich 38 des Klemmrings 4 zu liegen. Die Rohrklemme 1 bzw. der Klemmring 4 kann dann gemäss der untenstehenden Beschreibung geklemmt werden, und bringt dabei eine Klemmkraft auf das Rohr 2 und das Anschlussstück 3 auf, so dass das Rohr 2 zum Anschlussstück 3 geklemmt wird. Der maximale Aussendurchmesser des Lagerungsabschnittes 22 ist etwas kleiner oder gleich dem Innendurchmesser des Rohres 2 gewählt. Demnach sind die maximalen Aussendurchmesser der Vorsprünge 71 des Dichtbereichs 70 und der Haltevorsprünge 81 des Haltebereichs 80 vorzugsweise etwas kleiner gewählt als der Rohrinnendurchmesser vor der Verpressung.

Die Rohrklemme 1 umfasst in der gezeigten Ausführungsform einen Klemmring 4 und einen durch den Klemmring 4 zusammenpressbaren Spannring 7. Die Rohrklemme 1 umgibt mit Klemmring 4 und Spannring 7 das Rohr 2. Alternativ kann die Rohrklemme 1 auch ohne den Spannring ausgebildet sein, wobei dann der Klemmring 4 direkt auf das Rohr 2 wirken würde.

Der Klemmring 4 weist einen sich entlang seines Umfanges erstreckenden ringförmigen Abschnitt 5 und einen sich von diesem Abschnitt 5 radial nach aussen erstreckender Pressabschnitt 6. Der Pressabschnitt 6 kann auch als Ohr 6 bezeichnet werden. Das Ohr 6 ist mit einem Werkzeug zusammenpressbar wobei sich der Durchmesser des ringförmigen Abschnittes 5 verringert, so dass eine Klemmkraft in radialer Richtung zur Mittelachse M auf das Rohr 2 im Bereich des Lagerungsabschnittes 22 bereitgestellt werden kann.

Der Spannring 7 ragt mit einem Spannabschnitt 8 mindestens teilweise in den ringförmigen Abschnitt 5 des Klemmrings 4 ein. In der vorliegenden Ausführungsform ragt der Spannabschnitt 8 im Wesentlichen vollständig in den ringförmigen Abschnitt 5 ein. Weiter kann der Spannabschnitt 8 auch durch den ringförmigen Abschnitt 5 hindurchragen, so dass sich der Spannring 7 bezüglich des ringförmigen Abschnittes 5 und der Mittelachse M auf beiden Seiten aus dem ringförmigen Abschnitt 5 erstreckt.

Der Spannabschnitt 8 liegt zwischen dem ringförmigen Abschnitt 5 des Klemmrings 4 und dem Rohr 2. Der Spannabschnitt 8 beziehungsweise der Spannring 7 ist mit einem Innenraum 12 dabei so ausgebildet, dass diese das Rohr 2 im Wesentlichen vollständig umgeben. Der Spannabschnitt 8 verfügt zudem über mindestens einen Schlitz 9, welcher die Wandung des Spannabschnittes von aussen zum Innenraum 12 hin durchbricht. Wenn nun der Klemmring 4 über das Ohr 6 zusammengepresst wird, wird eine Kraft vom Spannring 7 auf den Spannabschnitt 8 des Spannrings 7 übertragen. Dabei wird der Spannabschnitt 8 entsprechend gegen das Rohr 2 gedrückt, wobei die lichte Weite des Schlitzes 9 während des Vorgangs des Zusammenpressens mit zunehmender Kraft bzw. Verformung des Ohrs 6 verkleinert wird. Die lichte Weite des Schlitzes 9 ist dabei so gewählt, dass diese im zusammengepressten Zustand annähernd oder ganz aufgehoben wird. Das heisst, dass die lichte Weite des Schlitzes 9 bei Erreichen einer vorbestimmten Zusammenpresskraft annähernd oder ganz aufgehoben wird. Folglich werden die beiden Seiten des Spannabschnittes im Bereich der Schlitze 9 auf Block gefahren und der Schlitz 9 wird im zusammengepressten Zustand nahezu, insbesondere vollständig, aufgehoben. Dies hat den Vorteil, dass der Spannabschnitt 8 das Rohr 2 um dessen Umfang im Bereich der Klemmung vollständig umgibt, wodurch eine unerwünschte Verformung des Rohres vermieden wird. Zudem kann, falls das Rohr mit einer Kunststoffbeschichtung versehen ist ein Fliessen des Kunststoffes in allfällige Lücken der Rohrklemme 1, insbesondere in den Bereich des Ohrs 6, vermieden werden.

Der Spannring 7 weist weiterhin einen Halterungsabschnitt 10 auf, welcher über einen Verbindungsabschnitt 11 mit dem Spannabschnitt 8 in Verbindung steht. Dies kann gut in der Figur 1 erkannt werden. Halterungsabschnitt 10, Verbindungsabschnitt 11 und Spannabschnitt 8 sind dabei einstückig miteinander verbunden und definieren den zylindrischen Innenraum 12, welcher das Rohr 2 aufnehmen kann.

Der Verbindungsabschnitt 11 ist hier zwischen dem Halterungsabschnitt 10 und dem Spannabschnitt 8 angeordnet. Der Verbindungsabschnitt 11 ist dabei vorzugsweise so ausgebildet, dass dieser während dem Vorgang des Zusammenpressens ein Abscheren des Spannabschnittes 8 vom Halterungsabschnitt 10 zulässt. Folglich wird beim Vorgang des Zusammenpressens des Ohrs 6 der Spannabschnitt 8 vom Halterungsabschnitt 10 abgeschert und die Teile des Spannabschnittes 8 werden entlang einer radialen Bewegung zur Mittelachse M zur Seitenwand 15 des Rohrs 2 bewegt. Der Verbindungsabschnitt 11 kann auch als Sollbruchstelle oder Filmscharnier bezeichnet werden. Durch diesen Abschervorgang, also dem Bruch des Verbindungsabschnittes bzw. der Sollbruchstelle, wird sichergestellt, dass die Elemente des Spannabschnittes 8 parallel über ihre ganze Länge entlang der Mittelachse M gesehen mit der Seitenwand 15 des Rohrs 2 in Kontakt stehen. Daher wird die Klemmkraft über die ganze Auflagefläche des Spannabschnittes gleichmässig verteilt und eine elliptische Verformung des Rohrs kann ausgeschlossen werden.

Der mindestens eine Schlitz 9 erstreckt sich in der vorliegenden Ausführungsform entlang der Mittelachse M des Spannrings 7. Das heisst, dass der mindestens eine Schlitz 9 parallel zur Mittelachse M verläuft. Der mindestens eine Schlitz 9 trennt den Spannring 7 in mindestens eine, vorzugsweise mehrere, Spannlaschen 13 auf.

In der Figur 1 kann ebenfalls gut erkannt werden, dass der Spannring 7 separat vom Klemmring 4 ausgebildet ist. Der Spannring 7 ragt dabei durch den ringförmigen Abschnitt 5 des Klemmrings 4 hinein.

Die Rohrklemme nach der Figur 1 kann durch Spannring 7 und Klemmring 4 oder durch Spannring 7, Klemmring 4 und Gehäuse 14 bereitgestellt werden. Das Gehäuse 14 umfasst einen Gehäuseinnenraum 24, welcher durch eine Wandung 25 begrenzt wird. In der Wandung 25 ist eine Öffnung 26 vorgesehen, durch welche das Ohr bzw. der Klemmabschnitt 6 hindurchragt, so dass dieses von Ausserhalb des Gehäuses 12 mit dem Werkzeug zugänglich ist.

Spannring 7 und Klemmring 4 werden bezüglich einer Drehung um die Mittelachse M im Gehäuse 14 ausgerichtet. Es kann also gesagt werden, dass über das Gehäuse 14 der Klemmring 4 und der Spannring 7 zueinander ausgerichtet werden. Vorzugsweise ist die Ausrichtung dergestalt, dass im Bereich des Ohrs 6, wo der ringförmige Abschnitt 5 unterbrochen wird, eine Spannlasche 13 des Spannrings 7 und nicht ein Schlitz 9 zu liegen kommt. Folglich sind die Schlitze 9 im Bereich des ringförmigen Abschnittes 5 angeordnet. Hierfür weist der Spannring 7 Orientierungsflächen auf, welche an bzw. zu entsprechenden Orientierungsflächen am Gehäuse ausrichtbar sind.

Für die Ausrichtung des Klemmrings 4 umfasst das Gehäuse 14 eine Ausrichtlasche 31, welche sich in die Öffnung 26 erstreckt. Die Ausrichtlasche 31 ist dabei so ausgebildet, dass sich diese in das Ohr 6 des Klemmrings 4 hineinerstreckt. Der Klemmring 4 weist im Bereich des Ohrs 6 mehrere Sicken 34 auf, welche die Stabilität des Ohrs 6 in diesem Bereich erhöhen.

Alternativ können auch der Klemmring 4 und/oder der Spannring 7 mit entsprechenden Mitteln ausgebildet sein, so dass der Klemmring 4 direkt zum Spannring 7 ausgerichtet wird. Dies ist vorteilhaft, wenn die Rohrklemme 1 ohne das Gehäuse 14 bereitgestellt wird.

In der Figur 1 kann die Abfolge der verschiedenen Teile der Rohrklemme 1, des Rohrs 2 und des Anschlussstückes 3 gut erkannt werden. Das Anschlussstück 3 ragt in den Rohrinnenraum 16 ein und wird vom Rohr 2 umgeben. Das Rohr 2 selbst wird durch den Spannring 7 umgeben und der Spannring 7 liegt im ringförmigen Abschnitt 5 des Klemmrings 4, welcher seinerseits im Gehäuseinnenraum 24 des Gehäuses 14 liegt.

Weiter kann das Gehäuse 14 noch ein optionales Sichtfenster 35 aufweisen, wodurch der Installateur erkennen kann, ob das Rohr korrekt in den Innenraum bewegt wurde.

Die Rohrklemme 1 umfasst hier weiterhin ein Kontrollelement 27, welches bei der Verpressung von einer ersten Position in eine zweite Position verschoben wird. Das Kontrollelement 27 steht dabei mit der Rohrklemme 1 in Verbindung und zeigt die Verpressung an, wenn es in der zweiten Position liegt. In der Figur 1 ist das Kontrollelement 27 in der zweiten Position gezeigt und ragt aus dem Gehäuse 14 hinaus. Die hierin beschrieben Rohrklemme ist dimensionsunabhängig. Vorzugsweise wird die Rohrklemme zum Klemmen von Rohren mit Nenndurchmessern im Bereich von 12 mm bis 108 mm eingesetzt. Der Einsatz bei grösseren oder kleineren Rohren wäre auch denkbar.

**BEZUGSZEICHENLISTE**

| | | | |
|---|---|---|---|
| 1 | Rohrklemme | 27 | Kontrollelement |
| 2 | Rohr | 31 | Ausrichtlasche |
| 3 | Anschlussstück | 34 | Sicke |
| 4 | Klemmring | 35 | Sichtfenster |
| 5 | ringförmiger Abschnitt | 36 | vorderes Ende |
| 6 | Ohr, Klemmabschnitt | 37 | hinteres Ende |
| 7 | Spannring | 38 | Wirkabschnitt |
| 8 | Spannabschnitt | 39 | Kontaktfläche |
| 9 | Schlitz | 70 | Dichtbereich |
| 10 | Halterungsabschnitt | 71 | Vorsprung |
| 11 | Verbindungsabschnitt | 72 | Dichtfläche |
| 12 | Innenraum | 73 | Seitenflanke |
| 13 | Spannlasche | 74 | Seitenflanke |
| 14 | Gehäuse | 80 | Haltebereich |
| 15 | Seitenwand | 81 | Haltevorsprung |
| 16 | Rohrinnenraum | 82 | Seitenschenkel |
| 17 | Seitenwand | 90 | Führungsbereich |
| 18 | Hohlraum | 91 | konkaver Radius |
| 19 | Flansch | 92 | Abschnitt |
| 20 | Rille | 93 | Führungsfläche |
| 21 | Erhebung | 94 | Übergang |
| 22 | Lagerungsabschnitt | 95 | konischer Abschnitt |
| 24 | Gehäuseinnenraum | 99 | Übergang |
| 25 | Wandung | | |
| 26 | Öffnung | | |

## Patentansprüche

1. Rohrklemme (1) zum Verbinden eines Rohres (2) umfassend
ein in das Rohr (2) einsteckbares Anschlussstück (3) mit einem vorderen Ende (36), das in das Rohr (2) einragt, und einen das Anschlussstück (3) und das Rohr (2) über einen Wirkbereich (38) umgebenden Klemmring (4), der von einem Werkzeug zusammenpressbar ist,
wobei das Anschlussstück (3) eine im Wesentlichen zylindrisch um eine Mittelachse (M) verlaufende Seitenwand (17) mit einer gegen die Rohrinnenwand (15) gerichteten Kontaktfläche (39) umfasst,
wobei durch den Vorgang der Verpressung des Klemmenrings (4) das Rohr (2) gegen das Anschlussstück (3) gepresst wird, so dass die Kontaktfläche (39) des Anschlussstückes (3) mit der besagten Rohrinnenwand (15) in Kontakt kommt, wobei
das Anschlussstück (3) im Wirkbereich (38) des Klemmrings (4) einen Dichtbereich (70) zur Herstellung einer Dichtung zwischen Anschlussstück (3) und Rohr (2), sowie einen vom Dichtbereich (70) getrennt ausgebildeten Haltebereich (80) zur Aufnahme von zwischen dem Anschlussstück (3) und dem Rohr (2) auftretenden Kräften umfasst, wobei der Dichtbereich (70) mindestens einen sich radial von der Kontaktfläche (39) erstreckenden und um die Mittelachse (M) vollständig umlaufenden Vorsprung (71) und eine sich dem Vorsprung (71) direkt und unmittelbar anschließende Dichtfläche (72) umfasst, welche Dichtfläche (72)
einen grösseren Durchmesser als die Kontaktfläche (39) und einen kleineren Durchmesser als der Vorsprung (71) aufweist, **dadurch gekennzeichnet, dass**
in Richtung der Mittelachse (M) gesehen vor und nach der Dichtfläche (72) je ein umlaufender Vorsprung (71) angeordnet ist, so dass die Dichtfläche (72) in Richtung der Mittelachse (M) durch diese zwei Vorsprünge begrenzt ist,
**dass** der Vorsprung (71) durch zwei im Querschnitt senkrecht zur Mittelachse (M) gesehen geneigt zur Mittelachse (M) verlaufende Seitenflanken (73, 74) begrenzt ist,
wobei die Seitenflanken (73) die Seiten eines Dreiecks bilden, und
dass die Dichtfläche (72) durch eine zylindrische sich vollständig um die Mittelachse (M) erstreckende Oberfläche bereitgestellt wird.

2. Rohrklemme (1) nach Anspruch 1, **dadurch gekennzeichnet, dass** der Dichtbereich (70) bezüglich des vorderen Endes (36) in Richtung der Mittelachse (M) gesehen hinter dem Haltebereich (80) angeordnet ist.

3. Rohrklemme (1) nach einem der Ansprüche 1 oder 2, **dadurch gekennzeichnet, dass** die Seitenflanken (73), welche zur Dichtfläche (72) gerichtet sind, in einem flacheren Winkel zur Mittelachse (M) verlaufen als die Seitenflanken (74), welche zur Kontaktfläche (39) gerichtet sind.

4. Rohrklemme nach einem der vorhergehenden Ansprüche, **dadurch gekennzeichnet, dass** die Seitenflanken (73), welche zur Dichtfläche (72) gerichtet sind, einen Winkel (α) im Bereich von 50° bis 70°, insbesondere von 60°, zueinander einschliessen und/oder dass die Seitenflanken (74), welche zur Kontaktfläche (39) gerichtet sind, einen Winkel (b) von 30° bis 50°, insbesondere von 40°, zueinander einschliessen.

5. Rohrklemme nach einem der vorhergehenden Ansprüche, **dadurch gekennzeichnet, dass** der Haltebereich (80) mindestens einen sich radial von der Kontaktfläche (39) erstreckenden und um die Mittelachse (M) vollständig umlaufender Haltevorsprung (81) aufweist.

6. Rohrklemme nach Anspruch 5, **dadurch gekennzeichnet, dass** der Haltevorsprung (81) im Querschnitt senkrecht zur Mittelachse (M) gesehen die Form eines Dreiecks mit zwei Seitenschenkel (82) aufweist, besonders bevorzugt die Gestalt eines gleichschenkligen Dreiecks, wobei bevorzugt die beiden Seitenschenkel (82), welche die Begrenzung über der Kontaktfläche (39) definieren, die gleichen Schenkel des gleichschenkligen Dreiecks darstellen.

7. Rohrklemme nach Anspruch 6, **dadurch gekennzeichnet, dass** die Seitenschenkel (82) einen Winkel (Δ) einschliessen, welcher im Bereich von 30° bis 50° liegt, insbesondere bei 40° liegt.

8. Rohrklemme nach einem der Ansprüche 5 bis 7, **dadurch gekennzeichnet, dass** im Fall von mehreren Haltevorsprüngen (81) diese bezüglich Form und Dimension gleich oder im Wesentlichen gleich ausgebildet sind, oder im Fall von mehreren Haltevorsprüngen (81) diese sich bis hin zu einem maximalen Durchmesser erstrecken, wobei der Durchmesser derjenigen Haltvorsprünge (81), welche näher beim vorderen Ende (32) des Anschlussstückes (3) liegen, im Durchmesser kleiner oder grösser werden, als diejenigen Haltevorsprünge (81), welche weiter vom vorderen Ende entfernt sind.

9. Rohrklemme nach einem der vorhergehenden Ansprüche, **dadurch gekennzeichnet, dass** das Anschlussstück (3) zwischen dem Haltebereich (80) bzw. dem Dichtbereich (70) und dem vorderen Ende (32) ein Führungsbereich (90) mit einer Führungsfläche (93) aufweist, welcher einen grösseren Durchmesser als die Kontaktfläche (39) zwischen Dichtbereich (70) bzw. Haltebereich (80) aufweist.

10. Rohrklemme nach Anspruch 9, **dadurch gekennzeichnet, dass** der Führungsbereich (90) ausserhalb des Wirkbereichs (83) der Rohrklemme (4) angeordnet ist.

11. Rohrklemme nach Anspruch 9 oder 10, **dadurch gekennzeichnet, dass** der Übergang (94) von der Kontaktfläche (28) auf die Führungsfläche (93) mit einem im Querschnitt senkrecht zur Mittelachse M gesehen konkaven Radius (91) und mit einer sich daran anschliessenden und sich im Querschnitt gesehen geneigt zur Mittelachse (M) erstreckenden Abschnitt (92) ausgebildet ist.

12. Rohrklemme nach einem der vorhergehenden Ansprüche, **dadurch gekennzeichnet, dass** die Rohrklemme (1) weiter einen Spannring (7) umfasst, welcher mit einem Spannabschnitt (8) in den Wirkbereich (38) einragt, wobei der Spannabschnitt (8) vorzugsweise einen Haltebereich (89) aufweist.

13. Rohrklemmenanordnung umfassend eine Rohrklemme nach einem der Ansprüche 1 bis 12 und ein Rohr (2), wobei das Rohr vorzugsweise ein Verbundrohr mit einer Innenschicht, einer Mittelschicht und einer Aussenschicht ist, wobei die Mittelschicht aus einem metallischen Werkstoff und die Innenschicht und die Aussenschicht aus Kunststoff sind.

## Claims

1. Pipe clamp (1) for connecting a pipe (2), comprising
a connection piece (3), which can be plugged into the pipe (2) and has a front end (36) projecting into the pipe (2), and a clamping ring (4), which encloses the connection piece (3) and the pipe (2) over a region of action (38) and can be compressed by a tool,
wherein the connection piece (3) comprises a side wall (17), which runs essentially cylindrically around a centre axis (M) and has a contact surface (39) directed towards the inner pipe wall (15),
wherein, by virtue of the pressing action of the clamping ring (4), the pipe (2) is pressed against the connection piece (3), and therefore the contact surface (39) of the connection piece (3) comes into contact with said inner pipe wall (15),
wherein the connection piece (3), in the region of action (38) of the clamping ring (4), comprises a sealing region (70), for establishing a seal between connection piece (3) and pipe (2), and a retaining region (80), which is formed separately from the sealing region (70) and is intended for absorbing forces occurring between the connection piece (3) and the pipe (2), wherein the sealing region (70) comprises at least one protrusion (71), which extends radially from the contact surface (39) and runs all the way around the centre axis (M), and a sealing surface (72), which directly adjoins the protrusion (71),
said sealing surface (72) having a larger diameter than the contact surface (39) and a smaller diameter than the protrusion (71), **characterized**
**in that** an encircling protrusion (71) is arranged in each case upstream and downstream of the sealing surface (72), as seen in the direction of the centre axis (M), and therefore the sealing surface (72) is delimited by said two protrusions in the direction of the centre axis (M),
**in that** the protrusion (71) is delimited by two side flanks (73, 74) which are inclined in relation to the centre axis (M), as seen in cross section perpendicular to the centre axis (M),
wherein the side flanks (73) form the sides of a triangle, and
**in that** the sealing surface (72) is provided by a cylindrical surface extending all the way around the centre axis (M).

2. Pipe clamp (1) according to Claim 1, **characterized in that** the sealing region (70), in relation to the front end (36), is arranged downstream of the retaining region (80), as seen in the direction of the centre axis (M).

3. Pipe clamp (1) according to either of Claims 1 and 2, **characterized in that** the side flanks (73), which are directed towards the sealing surface (72), run at a shallower angle to the centre axis (M) than the side flanks (74), which are directed towards the contact surface (39).

4. Pipe clamp according to one of the preceding claims, **characterized in that** the side flanks (73), which are directed towards the sealing surface (72), enclose an angle (α) ranging from 50° to 70°, in particular 60°, in relation to one another, and/or **in that** the side flanks (74), which are directed towards the contact surface (39), enclose an angle (β) of 30° to 50°, in particular 40°, in relation to one another.

5. Pipe clamp according to one of the preceding claims, **characterized in that** the retaining region (80) has at least one retaining protrusion (81), which extends radially from the contact surface (39) and runs all the way around the centre axis (M).

6. Pipe clamp according to Claim 5, **characterized in that** the retaining protrusion (81), as seen in cross section perpendicular to the centre axis (M), is in the form of a triangle with two side legs (82), particularly preferably is in the form of an isosceles triangle, wherein preferably the two side legs (82), which define the boundary over the contact surface (39), constitute the equal-length legs of the isosceles triangle.

7. Pipe clamp according to Claim 6, **characterized in that** the side legs (82) enclose an angle (Δ) which ranges from 30° to 50°, in particular is 40°.

8. Pipe clamp according to one of Claims 5 to 7, **characterized in that**, in the case of a plurality of retaining protrusions (81), these are of identical, or essentially identical, design in respect of shape and dimension or, in the case of a plurality of retaining protrusions (81), these extend as far as a maximum diameter, wherein the diameter of those retaining protrusions (81) which are closer to the front end (32) of the connection piece (3) decreases or increases in relation to the diameter of those retaining protrusions (81) which are further away from the front end.

9. Pipe clamp according to one of the preceding claims, **characterized in that** the connection piece (3), between the retaining region (80) and/or the sealing region (70) and the front end (32), has a guide region (90) with a guide surface (93), said guide region having a larger diameter than the contact surface (39) between the sealing region (70) and/or retaining region (80).

10. Pipe clamp according to Claim 9, **characterized in that** the guide region (90) is arranged outside the region of action (38) of the clamping ring (4).

11. Pipe clamp according to Claim 9 or 10, **characterized in that** the transition (94) from the contact surface (28) to the guide surface (93) is formed with a concave radius (91), as seen in cross section perpendicular to the centre axis (M), and with an adjoining portion (92), which is inclined in relation to the centre axis (M) as seen in cross section.

12. Pipe clamp according to one of the preceding claims, **characterized in that** the pipe clamp (1) also comprises a tensioning ring (7), which has a tensioning portion (8) projecting into the region of action (38), wherein the tensioning portion (8) preferably has a retaining region (89).

13. Pipe-clamp arrangement comprising a pipe clamp according to one of Claims 1 to 12 and a pipe (2), wherein the pipe is preferably a composite pipe with an inner layer, a central layer and an outer layer, wherein the central layer is made of a metallic material and the inner layer and the outer layer are made of plastics material.

## Revendications

1. Collier de serrage de tuyau (1) pour connecter un tuyau (2), comportant
une pièce de raccordement (3) pouvant être enfichée dans le tuyau (2) et présentant une extrémité avant (36) qui fait saillie dans le tuyau (2), et une bague de serrage (4) entourant la pièce de raccordement (3) et le tuyau (2) sur une région d'action (38), laquelle bague de serrage peut être comprimée par un outil,
la pièce de raccordement (3) comportant une paroi latérale (17) essentiellement cylindrique s'étendant autour d'un axe médian (M) et présentant une surface de contact (39) orientée en direction de la paroi intérieure de tuyau (15),
le tuyau (2) étant pressé contre la pièce de raccordement (3) au moyen de l'opération de compression de la bague de serrage (4), de telle sorte que la surface de contact (39) de la pièce de raccordement (3) vienne en contact avec ladite paroi intérieure de tuyau (15),
la pièce de raccordement (3) comportant, dans la région d'action (38) de la bague de serrage (4), une région d'étanchéité (70) pour réaliser un joint d'étanchéité entre la pièce de raccordement (3) et le tuyau (2), ainsi qu'une région de retenue (80) réalisée de manière séparée de la région d'étanchéité (70) pour recevoir des forces se produisant entre la pièce de raccordement (3) et le tuyau (2), la région d'étanchéité (70) comportant au moins une saillie (71) s'étendant radialement à partir de la surface de contact (39) et entièrement périphérique autour de l'axe médian (M) et une surface d'étanchéité (72) se raccordant directement et immédiatement à la saillie (71), laquelle surface d'étanchéité (72) présente un plus grand diamètre que la surface de contact (39) et un plus petit diamètre que la saillie (71),
**caractérisé**
**en ce que**, vu dans la direction de l'axe médian (M), une saillie périphérique (71) est à chaque fois disposée avant et après la surface d'étanchéité (72), de telle sorte que la surface d'étanchéité (72) soit limitée par ces deux saillies dans la direction de l'axe médian (M),
**en ce que** la saillie (71) est limitée par deux flancs latéraux (73, 74) s'étendant, vus en section transversale perpendiculairement à l'axe médian (M), de manière inclinée par rapport à l'axe médian (M),
les flancs latéraux (73) formant les côtés d'un triangle et
**en ce que** la surface d'étanchéité (72) est produite par une surface cylindrique s'étendant entièrement autour de l'axe médian (M).

2. Collier de serrage de tuyau (1) selon la revendication 1, **caractérisé en ce que** la région d'étanchéité (70) est, vue dans la direction de l'axe médian (M), disposée derrière la région de retenue (80) par rapport à l'extrémité avant (36).

3. Collier de serrage de tuyau (1) selon la revendication 1 ou 2, **caractérisé en ce que** les flancs latéraux (73) qui sont orientés en direction de la surface d'étanchéité (72) sont orientés suivant un angle plus obtus par rapport à l'axe médian (M) que les flancs latéraux (74) qui sont orientés en direction de la surface de contact (39).

4. Collier de serrage de tuyau selon l'une quelconque des revendications précédentes, **caractérisé en ce que** les flancs latéraux (73) qui sont orientés en direction de la surface d'étanchéité (72) forment les uns avec les autres un angle (α) dans la plage de 50° à 70°, en particulier de 60°, et/ou **en ce que** les flancs latéraux (74) qui sont orientés en direction de la surface de contact (39) forment les uns avec les autres un angle (β) de 30° à 50°, en particulier de 40°.

5. Collier de serrage de tuyau selon l'une quelconque des revendications précédentes, **caractérisé en ce que** la région de retenue (80) comprend au moins une saillie de retenue (81) s'étendant radialement à partir de la surface de contact (39) et entièrement périphérique autour de l'axe médian (M).

6. Collier de serrage de tuyau selon la revendication 5, **caractérisé en ce que** la saillie de retenue (81) présente, vue en section transversale perpendiculairement à l'axe médian (M), la forme d'un triangle pourvu de deux côtés latéraux (82), de manière particulièrement préférée la configuration d'un triangle isocèle, les deux côtés latéraux (82) qui définissent la limitation par le biais de la surface de contact (39) constituant de préférence les côtés égaux du triangle isocèle.

7. Collier de serrage de tuyau selon la revendication 6, **caractérisé en ce que** les côtés latéraux (82) forment un angle (Δ) qui se situe dans la plage de 30° à 50° et qui vaut en particulier 40°.

8. Collier de serrage de tuyau selon l'une quelconque des revendications 5 à 7, **caractérisé en ce que**, dans le cas de plusieurs saillies de retenue (81), celles-ci sont réalisées de manière identique ou essentiellement identique en termes de formes et de dimensions, ou dans le cas de plusieurs saillies de retenue (81), celles-ci s'étendent jusqu'à un diamètre maximal, le diamètre des saillies de retenue (81) qui se situent plus près de l'extrémité avant (32) de la pièce de raccordement (3) étant inférieur ou supérieur au diamètre des saillies de retenue (81) qui sont plus éloignées de l'extrémité avant.

9. Collier de serrage de tuyau selon l'une quelconque des revendications précédentes, **caractérisé en ce que** la pièce de raccordement (3) présente, entre la région de retenue (80) ou la région d'étanchéité (70) et l'extrémité avant (32), une région de guidage (90) pourvue d'une surface de guidage (93), laquelle présente un plus grand diamètre que la surface de contact (39) entre la région d'étanchéité (70) ou la région de retenue (80).

10. Collier de serrage de tuyau selon la revendication 9, **caractérisé en ce que** la région de guidage (90) est disposée à l'extérieur de la région d'action (38) de la bague de serrage (4).

11. Collier de serrage de tuyau selon la revendication 9 ou 10, **caractérisé en ce que** la transition (94) de la surface de contact (28) à la surface de guidage (93) est réalisée de manière à présenter un rayon concave (91), vu en section transversale perpendiculairement à l'axe médian (M), et avec une portion (92) s'y raccordant et inclinée par rapport à l'axe médian (M), vue en section transversale.

12. Collier de serrage de tuyau selon l'une quelconque des revendications précédentes, **caractérisé en ce que** le collier de serrage de tuyau (1) comporte en outre un anneau tendeur (7), lequel fait saillie, par une portion de tensionnement (8), dans la région d'action (38), la portion de tensionnement (8) comprenant de préférence une région de retenue (89).

13. Ensemble de collier de serrage de tuyau comportant un collier de serrage de tuyau selon l'une quelconque des revendications 1 à 12 et un tuyau (2), le tuyau étant de préférence un tuyau composite présentant une couche intérieure, une couche centrale et une couche extérieure, la couche centrale étant constituée d'un matériau métallique et la couche intérieure et la couche extérieure étant constituées de plastique.
